# EUROPÄISCHE PATENTANMELDUNG

(11) **EP 0 878 487 A1**
(43) Veröffentlichungstag der Anmeldung: **18.11.1998**
(21) Anmeldenummer: 98107628.4
(22) Anmeldetag: 27.04.1998
(51) Int. Cl.: C08F 8/44, C08F 8/48, C08F 26/06

(54) **Untersättigte Polykationen sowie ihre Herstellung und Verwendung**

(30) Priorität: 12.05.1997 DE 19719900
(71) Anmelder: Clariant GmbH, 65929 Frankfurt am Main (DE)
(72) Erfinder: Eyrisch, Oliver, Dr., 45127 Essen (DE); Maier, Guillermo, Dipl.-Ing., 84533 Haining (DE)

(57) **Zusammenfassung**

Es werden neue, wasserlösliche Homo- oder Copolymere beschrieben, die im Polymer 1,1-Diallyl-3,4-dimethylen-pyrrolidinium-Kationen enthalten und zusätzlich auch 1,1-Dialkyl-3,4-dimethylen-pyrrolidinium-Kationen aufweisen können. Die Polymeren werden hergestellt, indem man zunächst ein Diallylammoniumsalz der Formel [(CH₂=CH-CH₂)₂NH₂]⁺X⁻, worin X⁻ das Anion einer beliebigen Brönstedt-Säure und vorzugsweise Halogenid bedeutet, allein oder zusammen mit einem ungesättigten Comonomer polymerisiert und das resultierende Polymer oder Copolymer mit einer Base und einem Allylhalogenid umsetzt. Die neuen Polymere werden bevorzugt als Textilbehandlungsmittel verwendet.

## Beschreibung

Vernetzbare Polyelektrolyte spielen in vielfältigen Anwendungsbereichen eine wichtige Rolle. Sie können beispielsweise in Gegenwart von Textilien vernetzt werden, wodurch die Naßechtheitseigenschaften der Gewebe verbessert werden und damit das Ausbluten von gefärbten oder bedruckten Textilien verhindert oder verlangsamt wird.

In DE-A-195 09 982 werden Nachbehandlungsmittel für Textilien beschrieben. Diese Anmeldung betrifft ein polymeres Nachbehandlungsmittel, welches erhalten wird durch Umsetzung eines Homopolymers von Diallylamin oder N-Methyldiallylamin oder eines Copolymeren von Diallylamin und N-Methyldiallylamin mit einem Epihalogenhydrin, gegebenenfalls in Gegenwart eines aliphatischen Amins oder eines Polyamins oder auch eines Reaktionsprodukts aus der Umsetzung von Epihalogenhydrin mit einem aliphatischen Amin oder Polyamin. Das Verfahren ist aufwendig und wegen der Toxizität der Epihalogenhydrine und entsprechender Halogenhydrinderivate nicht unbedenklich.

Polykationen können Textilien auch antistatische und weichmachende Eigenschaften verleihen. Sie können weiterhin die Knitterfestigkeit erhöhen und das Bügeln erleichtern. Aktivierte, vernetzbare Polykationen eignen sich auch zum Imprägnieren von Papier.

Die klassische radikalische Polymerisation von Triallylamin oder Tetraallylammoniumsalzen ergibt bei Copolymerisationen stark verzweigte, wasserunlösliche Polymere und ist daher zur Herstellung linearer, ungesättigter Polykationen ungeeignet.

Die Synthese von wasserlöslichen, polymeren, quaternären Ammoniumsalzen durch eine radikalische Polymerisation von Diallylammoniumsalzen ist bekannt und führt zu linearen Polymerstrukturen. Ein Beispiel hierfür ist die Lösungspolymerisation von Diallyldimethylammoniumchlorid (DADMAC), die in US-A-3 288 770 oder in DD-B-127 729 beschrieben ist.

Um besondere Produkteigenschaften zu erhalten oder zur Synthese von Polymeren mit höherem Molekulargewicht, werden Copolymerisationen mit polyfunktionalen, quervernetzenden Comonomeren angewandt. Mischungen des Ammoniummonomeren mit Bisallylestern von Dicarbonsäuren werden durch eine radikalische Initiation in Wasserlösung polymerisiert (DD-B-127 729, DD-B-128 189 oder DD-B-128 247). Solche verzweigten Strukturen werden auch in Übereinstimmung mit der Lehre der FR-A-1 494 438 oder der US-A-3 544 318 erhalten. Hier wurden als kettenverzweigendes Mittel Triallyl- oder Tetraallylammoniumsalze verwendet. Die benötigten kleinen Mengen an Kettenverzweigungsmitteln werden zu Beginn der Polymerisation der Charge zugegeben. Es ist wohlbekannt, daß bei einer Konzentration des polyfunktionalen Monomeren von mehr als 0,1 % das erhaltene Polymer teilweise oder vollständig quervernetzt ist. Dies führt meist zur Unlöslichkeit des Polymeren in dem Lösungsmittel (Vollmert, Grundriß der Makromolekularen Chemie, Springer-Verlag, Berlin, 1962, Seite 196).

In EP-A-0 264 710 wird ein verbessertes Verfahren zur Copolymerisation von DADMAC mit derartigen polyfunktionalen Monomeren vorgestellt. Wird ein spezielles Dosierungsverfahren für das Comonomer angewandt, gelingt der Einbau des Comonomeren in einem größeren Ausmaß. Auf diese Art ergeben sich Polymere mit höherem Molekulargewicht und das Risiko der Gelbildung im Verlaufe der Polymerisation ist verringert. Im allgemeinen muß für ein erfolgreiches Polymerisationsergebnis ein ziemlich kompliziertes Zugabeprogramm durchgeführt werden.

In allen Fällen, bei denen polyfunktionale, quervernetzende Comonomere als Mittel zur Vergrößerung des Molekulargewichts verwendet werden, besteht jedoch wegen der Möglichkeit der Gelbildung ein technologisches Risiko. Andererseits ist es nicht zu vermeiden, daß neben hochverzweigten Polymerketten mit hohem Molekulargewicht, bedingt durch vorzeitigen Reaktionsabbruch, ein nicht tolerierbarer Anteil an Restmonomeren verbleibt sowie Makromoleküle mit geringeren Molekulargewichten erzeugt werden. Aufgrund der verringerten Aktivität in praktischen Anwendungen des Polyammoniumsalzes ist der Anteil mit niedrigem Molekulargewicht von Nachteil.

Verzweigte Polymere können auch durch ein Pfropf-Copolymerisationsverfahren synthetisiert werden (zum Beispiel "Grafting-on"). Dieses Verfahren wurde auch auf die Synthese von DADMAC-Acrylamid-Copolymeren angewandt (G.B. Butler, J. Macromol, Sci. A26, 1989, Seite 681). Es wird ein Copolymer aus DADMAC und Dihydroxyalkyl-Derivaten der Acrylsäure als Präpolymer synthetisiert und unter Benutzung von Ce⁴⁺-Salzen als Initiator eine radikalische Pfropfung von Acrylamid oder einer Mischung von Acrylamid und DADMAC auf die Präpolymerkette erreicht. Auf jeden Fall werden hohe Konzentrationen des Präpolymers benötigt, um Polymerausbeuten von etwa 80 % zu erhalten. Dies ist unter technischen Gesichtspunkten nicht hinnehmbar.

In ähnlicher Weise verzweigte Copolymere von Acrylamid und kationischen Monomeren wie kationischen, modifizierten Acrylestern oder Acrylamiden oder Diallylammoniumsalzen werden durch Copolymerisation von Acrylamid mit Makromonomeren der kationischen funktionalisierten Monomeren mit einer Doppelbindung als endständige Gruppe, wie in US-A-5 211 854 beschrieben, synthetisiert.

In DE-A-42 00 133, DE-A-42 00 136 und DE-A-42 00 139 werden durch Sulfocyclo-Polymerisation von Diallyl-, Triallyl- und Tetraallylammoniumsalzen polymere Pyrrolidiniumsalze erhalten. In DE-A-42 00 136 wird insbesondere die Synthese von Poly-(N-allyl-3,4-dimethylen-pyrrolidinium)-Salzen der nachstehenden Formel beschrieben, in welcher der Rest R Wasserstoff oder Alkyl bedeutet.

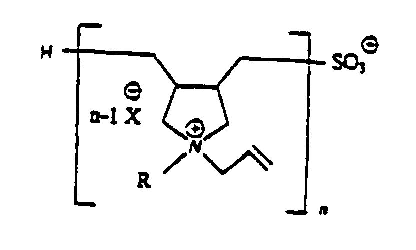

Gegenstand unserer Erfindung sind neue kationische Polymere, welche die N,N-Diallyl-3,4-dimethylen-pyrrolidinium-Gruppe als wesentliches Strukturelement enthalten. Die Erfindung umfaßt weiterhin auch Copolymere, die durch Umsetzungen von Polymeren, die N,N-Diallyl-3,4-dimethylen-pyrrolidinium-Gruppen enthalten, mit reaktiven Monomeren oder Polymeren hergestellt werden können.

Wesentliche Merkmale der Erfindung werden im folgenden Formelschema an einem Beispiel erläutert:

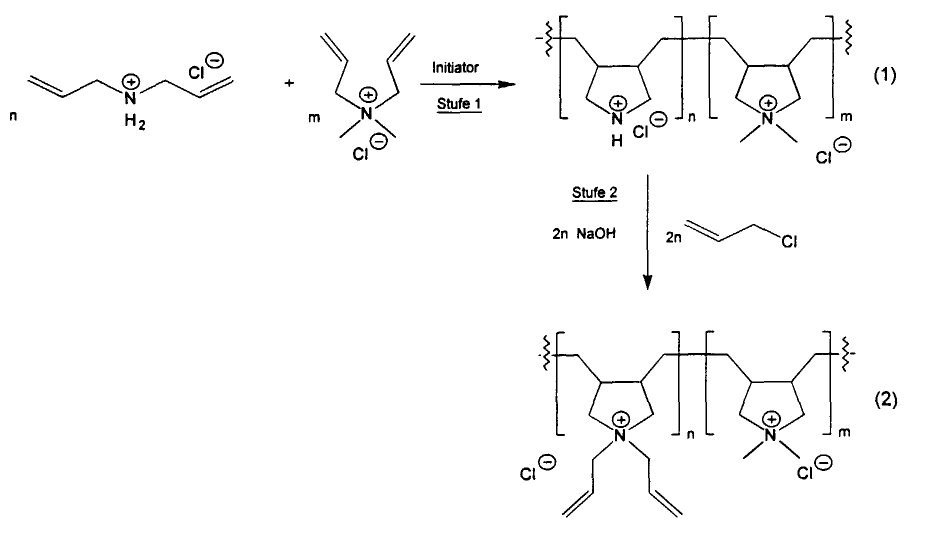

In Stufe 1 wird in prinzipiell bekannter Weise aus Diallylammoniumchlorid und DADMAC in wäßriger Lösung ein Präpolymer der Formel (1) hergestellt. In Stufe 2 wird dieses Polymer mit einer Base umgesetzt und mit einem Allylhalogenid allyliert, wodurch die neuen Polymeren der Formel (2) in fast quantitativer Ausbeute entstehen. Als Base wird vorzugsweise 50gew.%ige Natronlauge verwendet. Als Allylierungsmittel wird bevorzugt Allylchlorid eingesetzt.

Überraschenderweise wurde gefunden, daß selbst bei einem Unterschuß an Allylchlorid bei der Umsetzung von Polymeren der Formel (1) oder anderer Copolymerer, welche 3,4-Dimethylen-pyrrolidinium-Kationen enthalten, sich bevorzugt N,N-Diallyl-3,4-dimethylen-pyrrolidinium-Einheiten bilden. Dies bedeutet, daß das eine Allylgruppe aufweisende Intermediat wesentlich rascher allyliert wird als das 3,4-Dimethylen-pyrrolidinium-Kation im Präpolymer. Der Nachweis dieses überraschenden Effekts wurde mittels ¹³C-NMR geführt.

Die Herstellung von geeigneten Präpolymeren und den aus diesen mit Allylchlorid gewonnenen erfindungsgemäßen Polymeren wird im folgenden beschrieben, wobei sich die Prozentangaben auf Gewichtsprozente beziehen. Die Abkürzung "WS" bedeutet Wirkstoff und die Abkürzung "SZ" Säurezahl. Stickstoffäquivalente sind als mmolN/g Substanz definiert.

### 1. Herstellung der Präpolymeren:

### Copolymer A: (Herstellung eines Copolymeren aus DADMAC und Diallylaminhydrochlorid im molaren Verhältnis 4 : 1)

In einer 6-Liter-Polymerisationsapparatur, ausgerüstet mit Intensivkühler, Tropftrichter, Thermometer und Vakuumkontroller, werden 3,33 kg (8,8 mol) DADMAC wäßrig (WS: 43,3 %) und 441,3 g (2,2 mol)
Diallylammoniumhydrochlorid wäßrig (WS: 66,6 %) sowie 409,2 g Wasser vorgelegt. Anschließend wird auf circa 80 °C Innentemperatur aufgeheizt und ein Vakuum von circa 800 mbar angelegt. Innerhalb von circa 60 Minuten erfolgt die Zudosierung von 37,7 g (0,17 mol) Ammoniumperoxodisulfat in 181,3 g Wasser. Nach 2 Stunden Zwischenreaktion erfolgt eine erneute Zudosierung von 50,3 g (0,22 mol) Ammoniumperoxodisulfat in 75,5 g Wasser bei circa 80 °C und circa 470 mbar Vakuum. Nach 2 Stunden Nachreaktionszeit ist die Polymerisation beendet.
Viskosität 25 °C: 589 mPas (WS: 39 %)

### Copolymer B: (Herstellung eines Copolymeren aus DADMAC und Diallylaminhydrochlorid im molaren Verhältnis 9 : 1)

In einer 750-ml-Polymerisationsapparatur, ausgerüstet mit Intensivkühler, Thermometer und Vakuumkontroller, werden 242,1 g (0,9 mol) DADMAC wäßrig (WS: 60,1 %), 9,7 g (0,1 mol) Diallylamin und 40,4 g Wasser vorgelegt. Bei Raumtemperatur erfolgt die Zudosierung von 25,5 g (0,1 mol) verdünnter Salzsäure (WS: 14,3 %) innerhalb von 6 Minuten. Anschließend wird auf circa 80 °C aufgeheizt und ein Vakuum von circa 490 mbar angelegt. Die Zudosierung von 0,38 g (0,0017 mol) Ammoniumperoxodisulfat in 1,8 g Wasser erfolgt innerhalb 16 Minuten. Man läßt 50 Minuten nachreagieren. Die Zudosierung von 0,76 g (0,0033 mol) Ammoniumperoxodisulfat in 3,7 g Wasser erfolgt innerhalb von 9 Minuten. Man läßt 1 Stunde nachreagieren. Die Zudosierung von 2,28 g (0,010 mol) Ammoniumperoxodisulfat in 11,0 g Wasser erfolgt innerhalb von 5 Minuten. Man läßt 2 Stunden nachreagieren.

### Copolymer C: (Herstellung eines Copolymeren aus DADMAC und Diallylaminhydrochlorid im molaren Verhältnis 1 : 1)

In einer 750-ml-Polymerisationsapparatur, ausgerüstet mit Intensivkühler, Thermometer und Vakuumkontroller, werden 186,7 g (0,5mol) DADMAC wäßrig (WS: 43,3 %) und 48,6 g (0,5 mol) Diallylamin vorgelegt. Bei Raumtemperatur erfolgt die Zudosierung von 119,9 g (0,5 mol) verdünnter Salzsäure (SZ: 234). Anschließend wird auf circa 80 °C aufgeheizt und ein Vakuum von circa 800 mbar angelegt. Die Zudosierung von 3,42 g (0,015 mol) Ammoniumperoxodisulfat in 16,5 g Wasser erfolgt innerhalb 1,5 Stunden. Nach 2 Stunden Nachreaktionszeit ist die Polymerisation beendet.

### Copolymer D: (Herstellung eines Copolymeren aus DADMAC und Diallylaminhydrochlorid im molaren Verhältnis 95 : 5)

In einer 6-Liter-Polymerisationsapparatur, ausgerüstet mit Intensivkühler, Tropftrichter, Thermometer und Vakuumkontroller, werden 2,81 kg (10,45 mol) DADMAC wäßrig (WS: 60,1 %) sowie ein Gemisch aus 110,3 g (0,55 mol) Diallylaminhydrochlorid wäßrig (WS: 66,66 %) und 1376,2 g Wasser vorgelegt. Anschließend wird auf circa 85 °C Innentemperatur aufgeheizt und ein Vakuum von circa 800 mbar angelegt. Innerhalb von circa 60 Minuten erfolgt die Zudosierung von 37,7 g (0,17 mol) Ammoniumperoxodisulfat in 181,3 g Wasser. Nach 2 Stunden Nachreaktionszeit ist die Polymerisation beendet. Viskosität 25 °C: 490 mPas (WS: 40 %)

### Copolymer E: (Herstellung eines Copolymeren aus DADMAC und Diallylaminhydrochlorid im molaren Verhältnis 99 : 1)

In einer 6-Liter-Polymerisationsapparatur, ausgerüstet mit Intensivkühler, Tropftrichter, Thermometer und Vakuumkontroller, werden 2,93 kg (10,89 mol) DADMAC wäßrig (WS: 60,1 %) sowie ein Gemisch aus 22,1 g (0,11 mol) Diallylaminhydrochlorid wäßrig (WS: 66,6 %) und 1325,6 g Wasser vorgelegt. Anschließend wird auf circa 82 °C Innentemperatur aufgeheizt und ein Vakuum von circa 800 mbar angelegt. Innerhalb von circa 60 Minuten erfolgt die Zudosierung von 37,7 g (0,17 mol) Ammoniumperoxodisulfat in 181,3 g Wasser. Nach 2 Stunden Nachreaktionszeit ist die Polymerisation beendet.
Viskosität 25 °C: 626 mPas (WS: 40 %)

### Polymer F: (Herstellung eines Homo-Polymeren aus 100 % Diallylaminhydrochlorid)

In einer 750-ml-Polymerisationsapparatur, ausgerüstet mit Intensivkühler, Thermometer und Vakuumkontroller, werden 200,6 g (1,0 mol) Diallylaminhydrochlorid wäßrig (WS: 66,6 %) und 121,3 g Wasser vorgelegt. Anschließend wird auf circa 80 °C aufgeheizt und ein Vakuum von circa 800 mbar angelegt. Die Zudosierung von 3,42 g (0,015 mol) Ammoniumperoxodisulfat in 16,5 g Wasser erfolgt innerhalb 1 Stunde. Man läßt 2 Stunden nachreagieren. Es erfolgt eine erneute Dosierung von 3,42 g (0,015 mol) Ammoniumperoxodisulfat in 16,5 g Wasser innerhalb von 10 Minuten. Nach 2 Stunden Nachreaktionszeit ist die Umsetzung beendet.

### Copolymer G: [Herstellung eines Copolymeren aus DADMAC und 3-(Dimethylamino)-propyl-methacrylamid-hydrochlorid im molaren Verhältnis 4 : 1]

In einer 750-ml-Polymerisationsapparatur, ausgerüstet mit Intensivkühler, Thermometer und Vakuumkontroller, werden 215,2 g (0,8 mol) DADMAC wäßrig (WS: 60,1 %), 111,0 g Wasser und 34,1 g (0,2 mol) 3-(Dimethylamino)-propyl-methacrylamid vorgelegt. Die Zudosierung von 50,9 g (0,20 mol) verdünnter Salzsäure (WS: 14,3 %) erfolgt innerhalb von 7 Minuten bei Raumtemperatur. Anschließend wird auf circa 89 °C aufgeheizt und ein Vakuum von circa 800 mbar angelegt. Die Zudosierung von 3,42 g (0,015 mol) Ammoniumperoxodisulfat in 16,5 g Wasser erfolgt innerhalb 85 Minuten. Man läßt 2 Stunden nachreagieren. Dann erfolgt nochmals eine Zugabe von 3,42 g (0,015 mol) Ammoniumperoxodisulfat in 16,5 g Wasser innerhalb von 10 Minuten. Nach 2 Stunden Nachreaktionszeit ist die Umsetzung beendet.

### Copolymer H: [Herstellung eines Copolymeren aus 3-(Dimethylamino)-propyl-methacrylamid-hydrochlorid und Diallylaminhydrochlorid im molaren Verhältnis 4 : 1]

In einer 750-ml-Polymerisationsapparatur, ausgerüstet mit Intensivkühler, Thermometer und Vakuumkontroller, werden 136,2 g (0,8 mol) 3-(Dimethylamino)-propyl-methacrylamid, 40,1 g (0,2 mol) Diallylaminhydrochlorid (WS: 66,6 %) und 233,8 g Wasser vorgelegt. Die Zudosierung von 78,9 g (0,8 mol) konzenrierter Salzsäure erfolgt innerhalb von 10 Minuten bei Raumtemperatur. Anschließend wird auf circa 89 °C aufgeheizt und ein Vakuum von circa 800 mbar angelegt. Die Zudosierung von 3,42 g (0,015 mol) Ammoniumperoxodisulfat in 16,5 g Wasser erfolgt innerhalb 60 Minuten. Man läßt 2 Stunden nachreagieren. Es erfolgen nochmals zwei Zugaben von je 3,42 g (0,015 mol) Ammoniumperoxodisulfat in 16,5 g Wasser innerhalb von 45 Minuten und 13,7 g (0,06 mol) Ammoniumperoxodisulfat in 20,5 g Wasser innerhalb von 25 Minuten. Nach 2 Stunden Nachreaktionszeit ist die Umsetzung beendet.

### Copolymer I: [Herstellung eines Copolymeren aus 3-(Dimethylamino)-propyl-methacrylamid-hydrochlorid und Diallylaminhydrochlorid im molaren Verhältnis 1 : 1]

In einer 750-ml-Polymerisationsapparatur, ausgerüstet mit Intensivkühler, Thermometer und Vakuumkontroller, werden 85,1 g (0,5 mol) 3-(Dimethylamino)-propyl-methacrylamid, 48,6 g (0,5 mol) Diallylamin und 21,5 g Wasser vorgelegt. Die Zudosierung von 254,7 g (1,0 mol) verdünnter Salzsäure (WS: 14,3 %) erfolgt innerhalb von 10 Minuten bei Raumtemperatur. Anschließend wird auf circa 89 °C aufgeheizt und ein Vakuum von circa 800 mbar angelegt. Die Zudosierung von 6,84 g (0,030 mol) Ammoniumperoxodisulfat in 16,0 g Wasser erfolgt innerhalb 60 Minuten. Nach 2 Stunden Nachreaktionszeit ist die Umsetzung beendet.

### Copolymer J: [Herstellung eines Copolymeren aus 2-(Dimethylamino)-ethyl-methacrylat-hydrochlorid und Diallylaminhydrochlorid im molaren Verhältnis 4 : 1]

In einer 750-ml-Polymerisationsapparatur, ausgerüstet mit Intensivkühler, Thermometer und Vakuumkontroller, werden 56,5 g (0,36 mol) 2-(Dimethylamino)ethyl-methacrylat, 8,7 g (0,09 mol) Diallylamin und 16,8 g Wasser vorgelegt. Die Zudosierung von 114,6 g (0,45 mol) verdünnter Salzsäure (WS: 14,3 %) erfolgt innerhalb von 7 Minuten bei Raumtemperatur. Anschließend wird auf circa 89 °C aufgeheizt und ein Vakuum von circa 800 mbar angelegt. Die Zudosierung von 3,1 g (0,0135 mol) Ammoniumperoxodisulfat in 7,2 g Wasser erfolgt innerhalb 60 Minuten. Nach 2 Stunden Nachreaktionszeit ist die Umsetzung beendet.

### Copolymer K: (Herstellung eines Copolymeren aus DADMAC, Acrylamid und Diallylaminhydrochlorid im molaren Verhältnis 4,5 : 4,5 : 1)

In einer 750-ml-Polymerisationsapparatur, ausgerüstet mit Intensivkühler, Thermometer und Vakuumkontroller, werden 160,6 g (0,6 mol) DADMAC wäßrig (WS: 60,4 %), 42,6 g (0,6 mol) Acrylamid, 26,7 g (0,133 mol) Diallylaminhydrochlorid (WS: 66,6 %) und 161,2 g Wasser vorgelegt. Es wird auf circa 89 °C aufgeheizt und ein Vakuum von circa 800 mbar angelegt. Die Zudosierung von 2,1 g (0,009 mol) Ammoniumperoxodisulfat in 9,8 g Wasser erfolgt innerhalb 60 Minuten. Nach 2 Stunden Nachreaktionszeit ist die Umsetzung beendet.

### 2. Erfindungsgemäße Umsetzungen der Präpolymeren mit Allylchlorid:

### Umsetzung des Copolymeren A mit Allylchlorid:

In einer 4-Liter-Rührapparatur werden 2,1 kg (5,15 mol Stickstoffäquivalente) Copolymer A vorgelegt. Die Zugabe von 109,8 g (1,37 mol) 50%iger Natronlauge erfolgt innerhalb 3 Stunden bei 25 bis 60 °C. Man läßt 1,5 Stunden bei 50 °C nachrühren. Die Zugabe von 78,7 g (1,03 mol) Allylchlorid dauert 50 Minuten bei 50 °C. Man läßt 20 Minuten nachrühren. Dann erfolgt die Zugabe von 82,2 g (1,03 mol) 50%iger Natronlauge innerhalb von 13 Minuten bei 50 °C. Es folgt eine Zwischenreaktionszeit von 22 Minuten bei 50 °C. Anschließend dosiert man innerhalb von 32 Minuten 78,7 g (1,03 mol) Allylchlorid zu. Nach 2 Stunden bei 50 °C ist die Umsetzung quantitativ.
Viskosität 25 °C: 821 mPas (WS: 43 %)

### Umsetzung des Copolymeren B mit Allylchlorid:

In einer 1000-ml-Rührapparatur werden 308,0 g (0,78 mol Stickstoffäquivalente) Copolymer D und 102,7 g Wasser vorgelegt. Die Zugabe von 7,8 g (0,098 mol) 50%iger Natronlauge erfolgt bei Raumtemperatur innerhalb von 2,5 Stunden. Anschließend wird auf 50 °C aufgeheizt und 11,0 g (0,14 mol) Allylchlorid innerhalb 15 Minuten zugegeben. Man läßt 2,25 Stunden bei 50 °C nachreagieren und gibt 5,7 g (0,072 mol) 50%ige Natronlauge auf einmal zu. Nach 2 Stunden Nachreaktion ist die Umsetzung beendet.

### Umsetzung des Co-Polymeren C mit Allylchlorid:

In einer 250-ml-Rührapparatur werden 63,8 g (0,18 mol Stickstoffäquivalente) Copolymer C vorgelegt. Anschließend wird innerhalb von 2 Minuten 6,9 g (0,086 mol) 50%ige Natronlauge bei Raumtemperatur zugegeben. Man läßt 15 Minuten nachreagieren. Dann erfolgt portionsweise die Zugabe von 6,6 g (0,086 mol) Allylchlorid bei 50 °C innerhalb von 2,5 Stunden. Eine Nachreaktion von 0,5 Stunden beendet die Umsetzung.

### Umsetzung des Copolymeren D mit Allylchlorid:

In einer 4-Liter-Rührapparatur werden 2,03 kg (5,0 mol Stickstoffäquivalente) Copolymer D vorgelegt. Die Zugabe von 30,1 g (0,38 mol) 50%iger Natronlauge erfolgt innerhalb 3 Stunden bei 25 bis 60 °C. Man läßt 0,5 Stunden bei 50 °C nachrühren. Die Zugabe von 19,1 g (0,25 mol) Allylchlorid dauert 6 Minuten bei 50°C. Man läßt 60 Minuten nachrühren. Dann erfolgt die Zugabe von 19,9 g (0,25 mol) 50%iger Natronlauge innerhalb von 5 Minuten bei 50 °C. Es folgt eine Zwischenreaktionszeit von 20 Minuten bei 50 °C. Anschließend dosiert man innerhalb von 19 Minuten 19,1 g (0,25 mol) Allylchlorid zu. Nach 2 Stunden bei 50 °C ist Umsetzung quantitativ.
Viskosität 25 °C: 521 mPas (WS: 40 %)

### Umsetzung des Copolymeren E mit Allylchlorid:

In einer 4-Liter-Rührapparatur werden 2,04 kg (5,0 mol Stickstoffäquivalente) Copolymer E vorgelegt. Die Zugabe von 10,6 g (0,133 mol) 50%iger Natronlauge erfolgt innerhalb 1 Stunde bei 25 bis 60 °C. Man läßt 0,5 Stunden bei 50°C nachrühren. Die Zugabe von 4,2 g (0,05 mol) Allylchlorid dauert 1 Minute bei 50 °C. Man läßt 30 Minuten nachrühren. Dann erfolgt die Zugabe von 4,4 g (0,05 mol) 50%iger Natronlauge in einer Minute bei 50°C. Es folgt eine Zwischenreaktionszeit von 15 Minuten bei 50 °C. Anschließend dosiert man 4,2 g (0,05 mol) Allylchlorid in einer Minute zu. Nach 2 Stunden bei 50 °C ist die Umsetzung quantitativ.
Viskosität 25 °C: 662 mPas (WS: 40 %)

### Umsetzung des Polymeren F mit Allylchlorid:

In einer 0,5-Liter-Rührapparatur werden 130,0 g (0,36 mol Stickstoffäquivalente) Polymer F und 60 g Wasser vorgelegt. Die Zugabe von 36,3 g (0,45 mol) 50%iger Natronlauge erfolgt 0,5 Stunden bei 25 bis 50 °C. Man läßt 0,5 Stunden bei 50 °C nachrühren. Die Zugabe von 19,2 g (0,25 mol) Allylchlorid erfolgt innerhalb von 18 Minuten bei 50 °C. Man läßt 80 Minuten nachrühren und verdünnt in dieser Zeit den Ansatz mit 63 g Wasser. Dann erfolgt die Zugabe von 20,1 g (0,25 mol) 50%iger Natronlauge bei 50 °C in 4 Minuten. Es folgt eine Zwischenreaktionszeit von 20 Minuten bei 50 °C. Anschließend dosiert man 19,2 g (0,25 mol) Allylchlorid in 13 Minuten zu. Nach 4 Stunden ist die Umsetzung bei 50 °C beendet. Während dieser Nachreaktionszeit wird der Ansatz mit 30 g Wasser nochmals verdünnt.

### Umsetzung des Copolymeren G mit Allylchlorid:

In einer 0,25-Liter-Rührapparatur werden 207,1 g (0,46 mol Stickstoffäquivalente) Copolymer G vorgelegt. Die Zugabe von 6,3 g (0,08 mol) 50%iger Natronlauge erfolgt innerhalb von 2 Minuten bei 25 °C. Man läßt 4 Stunden bei 25 °C nachrühren. Anschließend wird auf 50 °C Innentemperatur erwärmt. Die Zugabe von 6,5 g (0,08 mol) Allylchlorid erfolgt innerhalb von 10 Minuten bei 50 °C. Eine Nachreaktionszeit von 2,5 Stunden bei 50 °C beendet die Umsetzung.

### Umsetzung des Copolymeren H mit Allylchlorid:

In einer 0,5-Liter-Rührapparatur werden 225,2 g (0,4 mol Stickstoffäquivalente) Copolymer H vorgelegt. Die Zugabe von 39,7 g (0,50 mol) 50%iger Natronlauge erfolgt innerhalb von 5 Stunden bei 25 °C. Man läßt 2 Stunden bei 25 °C nachrühren. Anschließend wird auf 50 °C Innentemperatur erwärmt. Die Zugabe von 28,5 g (0,37 mol) Allylchlorid erfolgt innerhalb von 45 Minuten bei 50 °C. Man läßt 1 Stunde bei 50 °C nachreagieren. Dann erfolgt die Zugabe von 6,0 g (0,07 mol) Natronlauge auf einmal. Es wird wieder 1 Stunde bei 50 °C nachgerührt. Die Zugabe von 5,7 g (0,07 mol) Allylchlorid dauert 3 Minuten bei 50 °C. Eine Nachreaktion von 2 Stunden beendet die Umsetzung.

### Umsetzung des Copolymeren I mit Allylchlorid:

In einer 0,5-Liter-Rührapparatur werden 172,8 g (0,4 mol Stickstoffäquivalente) Copolymer I vorgelegt. Die Zugabe von 34,7 g (0,44 mol) 50%iger Natronlauge erfolgt innerhalb von 6 Minuten bei Raumtemperatur, gleichzeitig wird auf 50 °C Innentemperatur aufgeheizt. Man läßt 1 Stunden bei 50 °C nachrühren. Die Zugabe von 29,1 g (0,38 mol) Allylchlorid erfolgt innerhalb von 45 Minuten bei 50 °C. Man läßt 1 Stunde bei 50°C nachreagieren. Dann erfolgt die Zugabe von 15,2 g (0,19 mol) Natronlauge innerhalb 6 Minuten. Es wird 50 Minuten bei 50 °C nachgerührt. Die Zugabe von 14,5 g (0,19 mol) Allylchlorid dauert 4 Minuten bei 50 °C. Eine Nachreaktion von 3 Stunden beendet die Umsetzung.

### Umsetzung des Copolymeren J mit Allylchlorid:

In einer 0,5-Liter-Rührapparatur werden 184,5 g (0,4 mol Stickstoffäquivalente) Copolymer J vorgelegt. Die Zugabe von 34,7 g (0,44 mol) 50%iger Natronlauge erfolgt innerhalb von 6 Minuten bei Raumtemperatur, gleichzeitig wird auf 50 °C Innentemperatur aufgeheizt. Man läßt 1 Stunden bei 50 °C nachrühren. Die Zugabe von 29,1 g (0,38 mol) Allylchlorid erfolgt innerhalb von 45 Minuten bei 50 °C. Man läßt 1 Stunde bei 50 °C nachreagieren. Dann erfolgt die Zugabe von 6,1 g (0,076 mol) Natronlauge innerhalb 6 Minuten. Es wird 50 Minuten bei 50 °C nachgerührt. Die Zugabe von 5,8 g (0,076 mol) Allylchlorid dauert 4 Minuten bei 50 °C. Eine Nachreaktion von 3 Stunden beendet die Umsetzung.

### Umsetzung des Copolymeren K mit Allylchlorid:

In einer 0,5-Liter-Rührapparatur werden 270,0 g (0,65 mol Stickstoffäquivalente) Copolymer K vorgelegt. Es wird auf 50 °C aufgeheizt und 135 g Wasser zugegeben, damit die Mischung rührbar ist. Die Zugabe von 6,0 g (0,075 mol) 50%iger Natronlauge erfolgt innerhalb von 6 Minuten. Die Mischung wird wieder viskoser, deshalb werden nochmals 50 ml Wasser zugegeben. Man läßt 1 Stunden bei 50 °C nachrühren. Die Zugabe von 4,7 g (0,062 mol) Allylchlorid erfolgt innerhalb von 10 Minuten bei 50 °C. Man läßt 1,5 Stunde bei 50 °C nachreagieren. Dann erfolgt die Zugabe von 5,0 g (0,062 mol) Natronlauge innerhalb 6 Minuten. Es wird 1,5 Stunden bei 50 °C nachgerührt und nochmals 50 ml Wasser zugegeben. Die Zugabe von 4,7 g (0,062 mol) Allylchlorid dauert 4 Minuten bei 50 °C. Eine Nachreaktion von 3 Stunden beendet die Umsetzung.

## Patentansprüche

1. Wasserlösliche Homo- oder Copolymere, die im Polymer als Strukturelement 1,1-Diallyl-3,4-dimethylen-pyrrolidinium-Kationen der Struktur 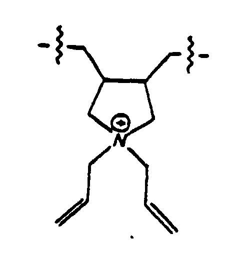 enthalten.

2. Copolymere nach Anspruch 1, die als weiteres Strukturelement 1,1-Dialkyl-3,4-dimethylen-pyrrolidinium-Kationen aufweisen, wobei die Alkylgruppen 1 bis 12 C-Atome, vorzugsweise 1 bis 3 C-Atome, enthalten.

3. Copolymere gemäß Anspruch 1 oder 2, dadurch gekennzeichnet, daß sie unter Verwendung eines oder mehrerer der folgenden Comonomeren hergestellt werden:
a) Dimethylaminoethylacrylat
b) Dimethylaminoethylmethacrylat
c) Dimethylaminopropylmethacrylamid
d) Dimethylaminomethylacrylamid
e) Acryloxyethyltrimethylammoniumchlorid
f) Methacryloxyethyltrimethylammoniumchlorid
g) Methacrylamidopropyltrimethylammoniumchlorid
h) N,N-Dimethylaminoalkylcarbonsäureallylester
i) Acrylamid
j) Methacrylamid.

4. Copolymere nach einem oder mehreren der Ansprüche 1 bis 3, dadurch gekennzeichnet, daß das molare Verhältnis von comonomeren Einheiten und 1,1-Diallyl-3,4-dimethylen-pyrrolidinium-Gruppen zwischen 1 und 500, bevorzugt zwischen 2 und 100 und besonders bevorzugt zwischen 4 und 20 beträgt.

5. Verfahren zur Herstellung eines Homo- oder Copolymeren nach einem oder mehreren der Ansprüche 1 bis 4, dadurch gekennzeichnet, daß man
a) ein Diallylammoniumsalz der Formel [(CH₂=CH-CH₂)₂NH₂]⁺X⁻, worin X⁻ das Anion einer beliebigen Brönstedt-Säure und vorzugsweise ein Halogenid bedeutet, allein oder zusammen mit einem ungesättigten Comonomer polymerisiert und
b) das resultierende Polymer oder Copolymer mit einer Base und einem Allylhalogenid umsetzt.

6. Verfahren nach Anspruch 5, dadurch gekennzeichnet, daß als Base Natronlauge und/oder Kalilauge verwendet wird.

7. Verfahren nach Anspruch 5, dadurch gekennzeichnet, daß als Allylhalogenid Allylchlorid verwendet wird.

8. Verfahren zur Allylierung des gemäß Anspruch 5, Schritt a) erhaltenen Polymers oder Copolymers, dadurch gekennzeichnet, daß man pro Stickstoffäquivalent 1,5 bis 2,0 mol Allylchlorid verwendet.

9. Verfahren nach einem oder mehreren der Ansprüche 5 bis 8, dadurch gekennzeichnet, daß man in Anspruch 5, Schritt a) ein Diallyldialkylammoniumhalogenid als Comonomer verwendet.

10. Verfahren nach Anspruch 5, bei dem mindestens ein Comonomer aus der in Anspruch 3 genannten Gruppe von Monomeren verwendet wird.

11. Verwendung der Homo- oder Copolymeren gemäß einem oder mehreren der Ansprüche 1 bis 4 als Textilbehandlungsmittel.
